# EUROPÄISCHE PATENTSCHRIFT

(11) **EP 2 024 408 B1**
(45) Veröffentlichungstag und Bekanntmachung des Hinweises auf die Patenterteilung: **02.09.2009**
(21) Anmeldenummer: 07729088.0
(22) Anmeldetag: 14.05.2007
(51) Int. Cl.: C08G 12/06, C08G 77/388, C08G 77/16, C08J 3/03, C09D 183/08, D06M 13/513

(54) **ÜBER METHYLOLGRUPPEN VERNETZBARE SILICONPOLYMERE**
SILICONE POLYMERS CROSSLINKABLE VIA METHYLOL GROUPS
POLYMÈRE DE SILICONE RÉTICULABLE AU NIVEAU DE GROUPEMENTS METHYLOL

(30) Priorität: 16.05.2006 DE 102006022842
(43) Veröffentlichungstag der Anmeldung: 18.02.2009
(73) Patentinhaber: Wacker Chemie AG, 81737 München (DE)
(72) Erfinder: MINGE, Oliver, 80337 München (DE); BALL, Peter, 84547 Emmerting (DE); KNEISSL, Andrea, 85521 Ottobrunn (DE)
(74) Vertreter: Fritz, Helmut
(86) Internationale Anmeldenummer: PCT/EP2007/054636
(87) Internationale Veröffentlichungsnummer: WO 2007/131985

(56) Entgegenhaltungen:
- DE-A1- 2 002 420
- US-A- 4 252 934

## Beschreibung

Die vorliegende Erfindung betrifft lagerstabile, nachvernetzbare Verbindungen, welche mindestens zwei Organopolysiloxaneinheiten und mindestens eine Methylolgruppe aufweisen, deren Herstellung und Verwendung.

Silicone bzw. siliconhaltige Formulierungen und Komposite sind bekannt und werden in Form von Filmen, Überzügen und Beschichtungen in großen Mengen zur Modifizierung und Ausstattung verschiedenster Werkstoffe und Fasern eingesetzt. In ihrem Eigenschaftsspektrum sind Silicone bzw. siliconhaltige Formulierungen rein organischen Filmen, Überzügen und Beschichtungen in vielen Belangen überlegen. So führt der Einsatz von Siliconprodukten zu einer weitgehenden Verbesserung anderweitig nicht erhältlicher aber in aller Regel erwünschter Eigenschaften wie zum Beispiel Fließverhalten, Gasdurchlässigkeit, Abriebfestigkeit, Hydrophobie, Glätte, Haptik oder Glanz des behandelten Substrates.

Ein großes Problem aller Beschichtungen, insbesondere jedoch von in ihrer Chemie limitierten Siliconbeschichtungen, ist die oftmals mangelnde Haftung auf dem jeweiligen, behandelten Substrat (sog. Permanenz der Beschichtung). Dies führt dazu, daß die Beschichtung entweder einfach mechanisch entfernt werden kann, etwa durch Reiben oder Scheuern, oder sich durch chemische Beanspruchung, etwa dem Kontakt mit verschiedenen Lösemitteln und/oder dem Aussetzen bestimmter pH-Milieus (wie sie z.B. in Waschvorgängen auftreten), wieder vom Substrat lösen kann.

Ein Ansatz das Problem der mangelnden Permanenz zu lösen, besteht darin, die einzelnen Siliconpolymerketten sowohl untereinander als auch mit dem zu behandelnden Substrat zu vernetzen und auf diese Weise die mechanische und chemische Widerstandsfähigkeit und damit die Permanenz des Gesamtsystems zu erhöhen. Die Vernetzung untereinander sowie die Bindung an das Substrat können dabei sowohl durch nicht kovalente Wechselwirkungen als auch durch kovalente Bindungen erfolgen.

Unter den nicht kovalenten Wechselwirkungen haben sich dabei vor allem Wasserstoffbrückenbindungen etabliert. Diese sorgen beispielsweise ausgebildet in Form von Urethan- oder Harnstoffgruppierungen innerhalb der Gruppe der thermoplastischen Siliconelastomere untereinander für eine erhöhte Netzwerkdichte und durch Wechselwirkung mit ebenfalls wasserstoffbrückenbildenden Gruppen des Substrates (z.B. Hydroxyeinheiten bei Celluloseoberflächen) auch für eine gewisse Fixierung. Herstellung und Verwendung solcher thermoplasischen Siliconelastomere ist unter anderem in den Veröffentlichungen EP 0 606 532 A1 und EP 0 342 826 A2 ausführlich beschrieben.

Ein anderer nicht kovalenter Vernetzungsmechanismus beruht auf Säure-Base-Wechselwirkungen zwischen lewis-basischen/lewisaciden Gruppen des Siliconpolymers mit lewis-aciden/lewisbasischen Gruppen des Substrats oder des Polymers. Beispiele hierfür sind aminofunktionelle Siliconöle, welche bekanntermaßen insbesondere Hydrophobie und Weichgriff von Textilien positiv beeinflussen und aufgrund ihrer lewisbasischen Aminogruppen die Eigenschaft haben, auf die lewisaciden Fasern "aufzuziehen". Solche Siliconaminöle sowie ihre Anwendungen sind beispielsweise in EP 1555011 A beschrieben.

Beiden Mechanismen ist gemein, daß ihre erzeugte Permanenz nur vorübergehend und unzureichend ist und die Beschichtung sowohl mechanisch, als auch chemisch leicht wieder entfernt werden kann.

Erheblich bessere Permanenzen erzielt man dann, wenn die Fixierung von Polymer und Substrat oder Vernetzung von Polymer untereinander durch das Ausbilden kovalenter Bindungen erfolgt.

Eine kovalente Vernetzung kann beispielsweise dadurch erfolgen, daß die Siliconpolymere bereits in der Herstellung durch Verwendung von z.B. trifunktionellen Bausteinen vernetzt werden. Die so erhaltenen Polymere werden dadurch jedoch in ihren Verarbeitungseigenschaften (z.B. Schmelzviskositäten, Verformbarkeit, Löslichkeit in einem Applikationshilfsmittel) negativ beeinflußt. Auch ist eine Fixierung an das Substrat in der Regel nicht mehr möglich. Eine nachträgliche Fixierung/Vernetzung im Anschluß an eine erfolgte Applikation ist deshalb immer sinnvoller.

Eine solche nachträgliche Fixierung/Vernetzung kann beispielsweise durch die Anwesenheit von Alkoxysilylgruppen im Siliconpolymer erfolgen, welche durch Hydrolyse und Kondensation mit Hydroxygruppen des Substrats oder Hydroxygruppen anderer Siliconpolymerer für eine bessere Permanenz sorgen. Solche alkoxysilylgruppenhaltige Siliconpolymere sind beispielsweise in der EP 1544223 A1 beschrieben. Die bei der Anbindung an das Substrat entstehenden Si-O-C oder Si-O-E-Bindungen (E= Element des Substrates) sind jedoch in aller Regel hydrolyselabil und daher leicht wieder zu öffnen, wodurch eine gute Permanenz insbesondere im wäßrigen Milieu in aller Regel nicht gegeben ist. Ein Ausbilden von vergleichsweise stabilen Siloxanbindungen Si-O-Si bedarf hingegen in aller Regel wieder einer vorherigen Behandlung des Substrates mit entsprechenden Silanen. Eine andere Möglichkeit für eine nachträglich kovalente Vernetzung zu sorgen, ist das Einbringen von (Meth)acrylatgruppen in das Siliconpolymer. Von diesen Gruppen ist bekannt, daß sie bei Bestrahlung mit UV-Licht vernetzen und aushärten. Solche photohärtbare Silikonpolymere sind bekannt und beispielweise in US 5 635 544 beschrieben. Die Reaktion der (Meth)acrylatgruppen sorgt jedoch in der Regel nur für eine Vernetzung der einzelnen Polymerketten untereinander und nicht für eine Fixierung an das Substrat. Eine für eine effektive Fixierung notwendige (Meth)acrylfunktionalisierung des Substrats ist jedoch umständlich und teuer.

Ein anderer Vernetzungsmechanismus, der im Bereich der rein organischen Polymere bereits bekannt ist, betrifft die sogenannte N-Methylolvernetzung. Dabei werden durch Copolymerisation mit geeigneten Monomeren Polymere erzeugt, welche N-Methylolamidgruppen tragen. Von diesen ist bekannt, daß sie bei Abwesenheit von Wasser unter erhöhter Temperatur oder bei Anwesenheit saurer Katalysatoren bereits bei niedrigeren Temperaturen kovalent an alkoholische Gruppen binden. Ebenso können sie untereinander reagieren und so eine Vernetzung des Polymers bewirken. Dabei entstehen in beiden Fällen kovalente Etherbindungen, welche bekanntermaßen sehr stark sind und nur unter extremen physikalischen oder chemischen Belastungen wieder gebrochen werden. Diesen Effekt macht sich beispielsweise die EP 0 143 175 A zunutze, welche über radikalische Emulsionspolymerisation Polymerdispersionen erzeugt, welche über den eben diskutierten Methylolmechanismus nachvernetzbar sind. Methylolamidgruppen lassen sich prinzipiell durch Umsetzung von Aminen mit Formaldehyd herstellen, in aller Regel führt die Reaktion jedoch zu polymeren Kondensationsprodukten, welche über Iminzwischenstufen zu polymeren Netzwerken führen Diese Umsetzung von Aminen mit Formaldehyd ist bereits beschrieben:

Die US 3461100 beschreibt Kondensationsprodukte aus Aldehyden und primären Di- und Monoaminen. Die entstehenden hochpolymeren Kondensationsprodukte werden als Schutzüberzüge diskutiert. Die DE 10047643 A1 beschreibt polymere Kondensationsprodukte aus Aldehyden und Siliconaminen, die jedoch auschließlich hochpolymer und hochvernetzt vorliegen.

In beiden Schriften liegt das Produkt bereits nach Umsetzung hochpolymer vor. Es liegt damit nicht mehr in einer reaktiven Form, wie sie das Monoadditionsprodukt eines Formaldehydmoleküls an ein Amin darstellt, vor und steht damit auch für Folgereaktionen an Substraten oder nachvernetzende Reaktionen untereinander nicht mehr zur Verfügung.

Gegenstand der Erfindung sind Verbindungen (M), welche mindestens zwei Organopolysiloxaneinheiten (S) und mindestens eine Methylolgruppe der allgemeinen Formel (1)

L¹L²N-M1 (1),

aufweisen, in der
- **M1**: einen Rest -HCR¹-OH,
- **R¹**: Wasserstoff oder einen gegebenenfalls mit -CN oder -Halogen substituierten C₁-C₁₀-Kohlenwasserstoffrest und,
- **L¹** und **L²**: organische N-C gebundene Reste bedeuten,
wobei mindestens **L¹** mindestens eine
Organopolysiloxaneinheit (S) aufweist,
wobei in **L¹** mindestens eine Organopolysiloxaneinheit (S) über eine Si-C Bindung gebunden ist,
wobei in **L²** die N-C Bindung über ein aliphatisch gesättigtes Kohlenstoffatom erfolgt und
wobei mindestens 50 % der Organopolysiloxaneinheiten (S) ausschliesslich unsubstituierte Kohlenwasserstoffreste und Si-O-Si Bindungen aufweisen.

Die Verbindungen (M) sind leicht herstellbar durch Umsetzungen von sekundären amingruppenhaltigen Siliconen mit Aldehydreagenzien. Die Verbindungen (M) können in reiner Form sowie in Form organischer Lösungen oder wässriger Dispersionen hergestellt werden.

Die Verbindungen (M) sind lagerstabil und über die Methylolgruppen der allgemeinen Formel (1) nachvernetzbar und weisen eine hervorragende Permanenz auf vielen Substraten auf. Viele Substrate benötigen dazu keine Vorbehandlung .

Es können an die Organopolysilcxaneinheit (S), welche über eine Si-C Bindung in **L¹** gebunden ist, weitere Organopolysiloxaneinheiten (S) über Si-O-Si Bindungen gebunden sein. Vorzugsweise sind mindestens 5, insbesondere mindestens 10 Organopolysiloxaneinheiten (S) über Si-O-Si Bindungen angebunden.

Vorzugsweise bedeutet **R¹** Wasserstoff oder einen unsubstituierten oder substituierten C₁-C₃-Kohlenwasserstoffrest, insbesondere Wasserstoff, Methyl oder Ethyl.

Die Verbindungen (M) können bevorzugt die allgemeine Formel (2)

Q-(2a,2b)_{C}-Q (2)

besitzen, wobei die Einheiten 2a und 2b statistisch, blockartig, alternierend oder in einer Mischung daraus angeordnet sein können, wobei die Einheiten 2a und 2b den allgemeinen Formeln (2a) und (2b) 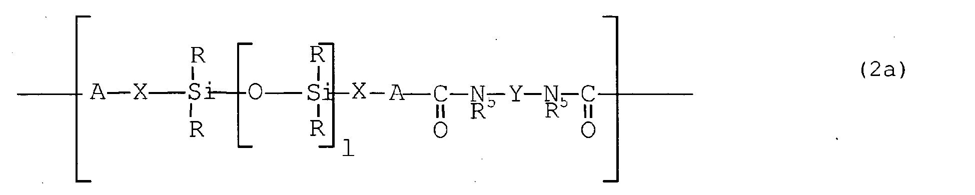 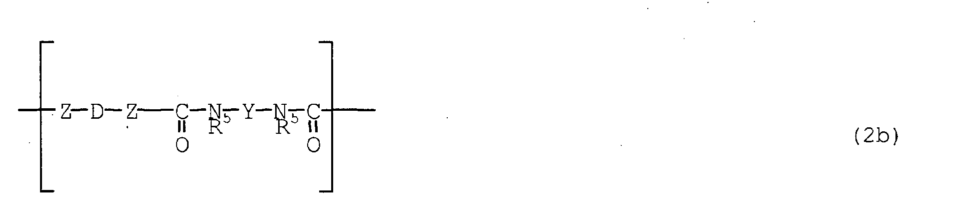 entsprechen, wobei
- **l** und **c**: eine ganze Zahl von mindestens 1,
- **R⁵**: M1 oder Wasserstoff, mit der Maßgabe, daß wenigstens ein Rest **R⁵** kein Wasserstoff ist,
- **R**: Wasserstoff oder einen monovalenten, gegebenenfalls mit-CN, -NCO, -NR²₂, -COOH, -COOR², -PO(OR²)₂, -Halogen,-Acryl, -Epoxy, -SH, -OH oder -CONR²₂ substituierten, C₁-C₂₀-Kohlenwasserstoffrest oder C₁-C₂₀-Kohlenwasserstoffoxyrest, in dem jeweils eine oder mehrere, einander nicht benachbarte Methyleneinheiten durch Gruppen -O-, -CO-, -COO-, -OCO-, -OCOO-, -S-, -NR²-, -(CH₂CH₂O)ₙ-, oder -(CH₂CHCH₃O)ₙ- ersetzt sein können und in denen eine oder mehrere, einander nicht benachbarte Methineinheiten durch Gruppen, -N=,-N=N- oder -P= ersetzt sein können,
- **R²**: Wasserstoff oder einen monovalenten, gegebenenfalls mit-CN, -NCO oder -Halogen substituierten, C₁-C₁₀-Kohlenwasserstoffrest,
- **n**: eine ganze Zahl von 1 bis 1000,
- **X**: einen Alkylen-Rest mit 1 bis 60 Kohlenstoffatomen, in dem einander nicht benachbarte Methyleneinheiten durch Gruppen -O- oder -S- ersetzt sein können,
- **A**: ein Sauerstoffatom, ein Schwefelatom oder -NR⁵-,
- **Z**: ein Sauerstoffatom, ein Schwefelatom oder -NR⁵-,
- **Y**: einen zweiwertigen, gegebenenfalls durch Fluor oder Chlor substituierten Kohlenwasserstoffrest mit 1 bis 20 Kohlenstoffatomen, wobei die N-C Bindungen über aliphatisch gesättigte Kohlenstoffatome erfolgt,
- **D**: einen gegebenenfalls durch Fluor, Chlor, C₁-C₆-Alkyl- oder C₁-C₆-Alkylester substituierten Alkylenrest mit 1 bis 700 Kohlenstoffatomen, in dem einander nicht benachbarte Methyleneinheiten durch Gruppen -O-, -COO-, -OCO-, oder-OCOO-, ersetzt sein können, der ebenfalls neutralisierte oder freie Amin-, Carbonsäure- oder Sulfonsäure-Gruppen enthalten kann und
- **Q**: eine reaktive oder nicht reaktive Endgruppe, welche kovalent an das Polymer gebunden ist, bedeuten.

**n** bedeutet vorzugsweise eine ganze Zahl von mindestens 3, insbesondere mindestens 25 und vorzugsweise höchstens 800, insbesondere höchstens 400, besonders bevorzugt höchstens 250.

**l** ist vorzugsweise eine ganze Zahl von mindestens 2, insbesondere mindestens 5 und vorzugsweise höchstens 200, insbesondere höchstens 100, besonders bevorzugt höchstens 50.

**c** ist vorzugsweise eine ganze Zahl von mindestens 2, insbesondere mindestens 5 und vorzugsweise höchstens 100, insbesondere höchstens 50, besonders bevorzugt höchstens 20.

Vorzugsweise bedeutet **R** einen einwertigen Kohlenwasserstoffrest mit 1 bis 6 Kohlenstoffatomen, insbesondere nicht substituiert.

Besonders bevorzugte Reste R sind Methyl, Ethyl, Vinyl und Phenyl.

Vorzugsweise bedeutet **R²** Wasserstoff oder einen einwertigen Kohlenwasserstoffrest mit 1 bis 6 Kohlenstoffatomen, insbesondere nicht substituiert.

Vorzugsweise bedeutet **X** einen Alkylen-Rest mit 1 bis 10 Kohlenstoffatomen. Vorzugsweise ist der Alkylen-Rest **X** nicht oder nur einmal unterbrochen.

Vorzugsweise bedeutet **A** eine NH-Gruppe, ein Sauerstoff-Atom oder ein Schwefelatom.

Vorzugsweise bedeutet **Z** ein Sauerstoffatom, ein Schwefelatom oder eine NH-Gruppe.

Vorzugsweise bedeutet **Y** einen zweiwertigen Kohlenwasserstoffrest mit 3 bis 13 Kohlenstoffatomen, der vorzugsweise nicht substituiert ist. Vorzugsweise bedeutet **Y** einen Aralkylen-, linearen oder cyclischen Alkylen-Rest.

Vorzugsweise bedeutet **D** einen Alkylenrest mit mindestens 2 Kohlenstoffatomen und höchstens 12 Kohlenstoffatomen.
Ebenfalls vorzugsweise bedeutet **D** einen Polyoxyalkylenrest, insbesondere Polyoxyethylenrest oder Polyoxypropylenrest mit mindestens 20, insbesondere mindestens 100 Kohlenstoffatomen und höchstens 800, insbesondere höchstens 200 Kohlenstoffatomen. Weiterhin bevorzugt ist ein Alkylenrest mit mindestens 2 Kohlenstoffatomen und höchstens 12 Kohlenstoffatomen, der durch eine neutralisierte oder freie Carbonsäure-, Sulfonsäure- oder Aminogruppe substituiert ist.

Als Endgruppe **Q** ist Wasserstoff bevorzugt.

Die Verbindungen (M) können bevorzugt die allgemeine Formel (3)

(SiO_{4/2})ₖ(R³SiO_{3/2})ₘ(R³₂SiO_{2/2})ₚ(R³₃SiO_{1/2})_{q}

[O_{1/2}SiR³₂-X¹-NM¹-X²-NR⁶ᵣR⁵₍₂₋ᵣ₎]ₛ[O_{1/2}^{H}]ₜ (3)

besitzen, wobei
- **X¹**: bivalente, gegebenenfalls substituierte aromatische, heteroaromatische oder aliphatische Reste (CR⁴₂)_{b,} in denen jeweils eine oder mehrere, einander nicht benachbarte Methyleneinheiten durch Gruppen -O-, -CO-, -COO-, -OCO-,-OCOO-, -S-, -NR⁴-, -(CH₂CH₂O)_{d}-, oder -(CH₂CHCH₃O)_{d}-ersetzt sein können und in denen eine oder mehrere, einander nicht benachbarte Methineinheiten durch Gruppen,-N=,-N=N- oder -P= ersetzt sein können,
- **X²**: bivalente, gegebenenfalls substituierte aliphatische Reste (CR⁴₂)_{b}, in denen jeweils eine oder mehrere, einander nicht benachbarte Methyleneinheiten durch Gruppen -O-, -CO-,-COO-, -OCO-, -OCOO-, -S-, -NR⁴-, -(CH₂CH₂O)_{d}-, oder-(CH₂CHCH₃O)_{d}- ersetzt sein können,
- **R⁴**: die Bedeutungen von **R²,**
- **b**: eine ganze Zahl von 1 bis 50,
- **d**: eine ganze Zahl von 1 bis 50,
- **R³** und **R⁶**: die Bedeutungen von **R,**
- **r**: Werte 0, 1 oder 2,
- **s**: ganzzahlige Werte von mindestens 1,
- **t**: 0 oder ganzzahlige Werte und
- **k + m + p + q**: ganzzahlige Werte von mindestens 2 bedeuten.

Die C₁-C₂₀-Kohlenwasserstoffreste und C₁-C₂₀-Kohlenwasserstoffoxyreste **R³** und **R⁶** können aliphatisch gesättigt oder ungesättigt, aromatisch, geradkettig oder verzweigt sein. **R³** und **R⁶** weisen vorzugsweise 1 bis 12 Atome, insbesondere 1 bis 6 Atome, vorzugsweise nur Kohlenstoffatome, oder ein Alkoxysauerstoffatom und sonst nur Kohlenstoffatome auf. Vorzugsweise sind **R³** und **R⁶** geradkettige oder verzweigte C₁-C₆-Alkylreste oder Phenylreste. Besonders bevorzugt sind die Reste **R³** Wasserstoff, Methyl, Ethyl, Phenyl und Vinyl. Bevorzugt sind **R⁶** und **R⁴** ein Wasserstoff und **R³** ist Methyl.

**b** und **d** sind vorzugsweise eine ganze Zahl von höchstens 20, insbesondere höchstens 6.

**s** ist vorzugsweise eine ganze Zahl von mindestens 2, höchstens 50, insbesondere höchstens 10.
**t** ist vorzugsweise eine ganze Zahl von höchstens 50, insbesondere höchstens 10.

Das Polysiloxan der allgemeinen Formel (3) kann linear, cyclisch, verzweigt oder vernetzt sein. Die Summe von **k, m, p, q, s** und **t** ist vorzugsweise eine ganze Zahl von mindestens 3, insbesondere 8 und höchstens 20000, insbesondere höchstens 1000.

Vorzugsweise beträgt **p/k+m+p+q** mindestens 0,5, insbesondere mindestens 0,9.

Die Herstellung der Verbindungen (M) erfolgt durch Umsetzung der Vorläuferverbindungen der Verbindungen (M), welche mindestens zwei Organopolysiloxaneinheiten (S) und mindestens eine sekundäre Aminogruppe der allgemeinen Formel (1*)

L¹L²N-H (1*),

aufweisen, mit Aldehydreagenzien der allgemeinen Formel (4),

R¹-COH (4),

wobei **L¹, L²** und **R¹** die vorstehenden Bedeutungen aufweisen und wobei mindestens 50 % der Organopolysiloxaneinheiten (S) ausschliesslich unsubstituierte Kohlenwasserstoffreste und Si-O-Si Bindungen aufweisen.

Die Herstellung der Siliconpolymere der allgemeinen Formel (2) erfolgt zweckmäßigerweise ausgehend von Vorläuferverbindungen, die in ihrer Summenformel der allgemeinen Formel (2) entsprechen, mit der Maßgabe, daß alle Reste **R⁵** Wasserstoff bedeuten. Die Herstellung der Vorläuferverbindung der Siliconpolymere der allgemeinen Formel (2), in der alle Reste **R⁵** Wasserststoff bedeuten ist Stand der Technik und beispielsweise in der Schrift EP 1 489 129 A1 beschrieben.

Analog erfolgt die Herstellung der Siliconpolymere der allgemeinen Formel (3) vorzugsweise aus entsprechenden Vorläuferverbindungen, die in ihrer Summenformel der allgemeinen Formel (3) entsprechen, mit der Maßgabe, daß alle Reste **M1** und **R⁵** Wasserstoff bedeuten.
Solche aminofunktionellen Silicone, die in ihrer Summenformel der allgemeinen Formel (3) entsprechen, wobei alle Reste **M1** und **R⁵** Wasserstoff bedeuten, sind dem Fachmann bekannt und in großer Variation sowohl als Reinsubstanz, wie auch in fertigen wäßrigen Formulierungen erhältlich. Ihre Herstellung, ihre Formulierung und ihr Einsatz sind beispielsweise in WO 2005010078 beschrieben.

Die Verbindungen (M) fallen bei ihrer Herstellung entweder als Feststoffe, in organischer Lösung oder in wäßriger Dispersion an.

Zur Einführung der Methylolgruppe **M1** in die Vorläuferverbindungen der Verbindungen (M), werden diese mit einem oder mehreren Aldehydreagenzien behandelt. Zu den Aldeydreagenzien zählen monomere Formen des Formaldehyds, wie z.B. Formaldehydgas sowie wäßrige oder organische Lösungen von Aldehyden, ebenso, wie Formaldehyd in kondensierter Form, beispielsweise in Form von Trioxan oder anderen Formaldehydkondensaten.

Die Herstellung der Verbindungen (M) mit einem Aldehydreagens kann sowohl in Dispersion, in Lösung als auch in Festsubstanz, kontinuierlich oder diskontinuierlich erfolgen. Bevorzugt erfolgt dabei eine optimale und homogene Durchmischung der Bestandteile unter den Reaktionsbedingungen, wobei eine Phasenunverträglichkeit zwischen den Reaktionskomponenten gegebenenfalls durch Lösungsvermittler verhindert wird.

Als Lösungsvermittler bevorzugt sind Alkohole, wie Isopropanol Ether, wie Tetrahydrofuran und Dioxan, Kohlenwasserstoffe, wie Toluol chlorierte Kohlenwasserstoffe, Ketone, wie Aceton und Methylethylketon und Ester, sowie deren Gemische. Lösungsvermittler mit einem Siedepunkt bzw. Siedebereich von bis zu 120° C bei 0,1 MPa bevorzugt.

Ebenfalls kann die Reaktion oftmals in wäßriger Phase durchgeführt werden, wenn die Vorläuferverbindung der Verbindungen (M) ausreichend im wäßrigen Medium dispergierbar ist. Auch Mischungen aus polaren und/oder wassermischbaren organischen Lösemitteln mit Wasser sind vorteilhafte Lösemittelsysteme.

Vorzugsweise werden die Vorläuferverbindungen der Verbindungen (M) in einem geeigneten gegenüber Formaldehyd inerten Lösungsmittel gelöst und das Formaldehydreagenz anschließend zudosiert.

Ebenfalls bevorzugt ist eine Synthese ausschließlich in Wasser, in der das zu dosierende Formaldehydreagenz wäßrig ist und die Siliconkomponente in Wasser, das durch Säuren, Basen und Puffersysteme auf einen pH-Wert zwischen 6 und 9, insbesondere zwischen 7 und 8, eingestellt ist, dispergiert oder emulgiert vorliegt.
Ganz besonders bevorzugt ist die Synthese in einem wasserlöslichen Lösungsmittel oder einem Gemisch aus Wasser und einem wasserlöslichem Lösungsmittel, welches anschließend durch Lösungsmittelaustausch gegen Wasser ausgetauscht wird, wodurch man eine nachvernetzende, wäßrige Silicondispersion der Verbindungen (M) erhält. Eine nachträgliche Emulgierung der Verbindungen (M) ist ebenfalls möglich.

Die Verbindungen (M) eignen sich in Reinform oder als Bestandteil von Formulierungen als Beschichtungsmittel, Bindemittel und Überzugsmittel für eine Vielzahl von Substrate, insbesondere Fasern jeglicher Art, etwa Textilfasern, Cellulosefasern, Baumwoll- und Papierfasern, ebenso wie Kunsstofffasern, die umfassen aber nicht beschränkt sind auf Polyester-, Polyamid- oder Polyurethanfasern. Auch sind sie zur Beschichtung von Formkörpern und Oberflächen geeignet, die in der Lage sind mit Methylolfunktionen chemisch zu reagieren, beispielsweise Holz oder Holzverbundwerkstoffe, sowie papierbeschichtete Substrate und Formkörper.

Die Behandlung obiger Substrate mit den Verbindungen (M) verleiht dem behandelten Substrat an seiner Oberfläche typische Siliconeigenschaften, wie zum Beispiel Hydrophobie, anti-Blocking-Effekte oder Weichgriff.

Alle vorstehenden Symbole der vorstehenden Formeln weisen ihre Bedeutungen jeweils unabhängig voneinander auf. In allen Formeln ist das Siliciumatom vierwertig.

Soweit nicht anders angegeben sind alle Mengen- und Prozentangaben auf das Gewicht bezogen, alle Drücke 0,10 MPa (abs.) und alle Temperaturen 20°C.

### Beispiele

### Beispiel 1a: Herstellung einer organischen Lösung eines oberflächenaktiven Siloxan-Organo-Copolymers (nicht erfindungsgemäß)

In einem 2000 ml-Kolben mit Tropftrichter und Rückflusskühler wurde bei Raumtemperatur eine Lösung von 20,1 g Dimethylolpropionsäure (0,32 mol), 15,2 g Triethylamin (0,32 mol) und 3 Tropfen Dibutylzinndilaurat in 70 ml Aceton zu einer Lösung von 44,4 g Isophorondiisocyanat (0,40 mol) in 900 ml Aceton getropft. Anschließend wurde innerhalb 30 Minuten eine Lösung von 129 g α,ω-*Bis*-aminopropyl-Polydimethylsiloxan (Mol-Gewicht von 3200g/mol, 0,08 mol) in 200 ml Aceton zugegeben und 5 Stunden unter Rückfluss gekocht. Die erhaltene organische Lösung mit einem Feststoffgehalt von 20 Gewichts-% ist bei Raumtemperatur praktisch unbegrenzt haltbar.

### Beispiel 1b: Herstellung einer wässrigen Dispersion eines oberflächenaktiven Siloxan-Organo-Copolymers (nicht erfindungsgemäß)

Die nach Beispiel 1a erhaltene Acetonlösung wird unter starkem Rühren (Ultra-Turrax®) in 650 ml Wasser dispergiert und das Aceton und etwas Wasser am Rotationsverdampfer unter Vakuum entfernt. Man erhält dann eine Polydimethylsiloxan-Polyharnstoff-Polyurethan-Dispersion in Wasser, mit einem Festgehalt von 25 Gewichts-%, welche auch noch nach 3 Monaten stabil war.

Das oberflächenaktive Siloxan-Organo-Copolymer wird in den folgenden erfindungsgemäßen Beispielen mit dem Kürzel TPSE bezeichnet.

### Beispiel 2a: Herstellen eines methylolgruppenhaltigen TPSE

298 g einer nach Beispiel 1a hergestellten acetonischen Lösung von TPSE wird mit 86 g wäßriger Formaldehydlösung (36%) unter starkem Rühren bei Raumtemperatur über einen Zeitraum von 30 Minuten versetzt. Nach erfolgter Zugabe beträgt der pH-Wert etwa 8. Man rührt noch 2 Stunden bei Raumtemperatur. Dann werden 400 mL Wasser zugesetzt und das Aceton sowie überschüssiges Formaldehyd unter reduziertem Druck weitgehend entfernt. Abschließend stellt man mit Ammoniaklösung 25 % die erhaltene Dispersione auf pH=8 ein. Es entsteht eine stabile, wäßrige Dispersion von methylolhaltigem TPSE mit einem Festgehalt von ca. 20 %.

### Beispiel 2b: Herstellen eines methylolgruppenhaltigen TPSE

100 g einer nach Beispiel 1b hergestellten wäßrigen Dispersion von TPSE wird mit 30 g wäßriger Formaldehydlösung (36%) unter starkem Rühren bei Raumtemperatur über einen Zeitraum von 30 Minuten versetzt. Nach erfolgter Zugabe wird der pH-Wert auf etwa 8 eingestellt. Man rührt noch 2 Stunden bei Raumtemperatur und entfernt anschließend überschüssigen Formaldehyd unter reduziertem Druck. Es entsteht eine stabile, wäßrige Dispersion von methylolhaltigem TPSE mit einem Festgehalt von ca. 27 %.

### Beispiel 3a:

5 g WACKER Finish CT 34 E (Mikroemulsion eines Silconaminöls der Wacker Chemie AG, München, Deutschland) wird in 10 g Isopropanol gelöst und mit 20 g Wasser versetzt. Danach wird die Lösung mit 1000 µl wässriger Formaldehydlösung (36%) unter starkem Rühren bei Raumtemperatur versetzt. Nach erfolgter Zugabe beträgt der pH- Wert 5. Die Lösung wird mit Ammoniaklösung (25%) auf pH=8 eingestellt. Man rührt noch 1 Stunde bei Raumtemperatur und entfernt anschließend überschüssigen Formaldehyd unter leicht reduziertem Druck.

### Beispiel 3b:

5 g Wetsoft® CTA (Silconaminöl der Wacker Chemie AG, München, Deutschland) wird in 10 g Isopropanol gelöst und mit 20 g Wasser versetzt. Danach wird die Lösung mit 1000 µl wässriger Formaldehydlösung (36%) unter starkem Rühren bei Raumtemperatur versetzt. Nach erfolgter Zugabe beträgt der pH- Wert 4. Die Lösung wird mit Ammoniaklösung (25%) auf pH=8 eingestellt. Man rührt noch 1 Stunde bei Raumtemperatur und entfernt anschließend überschüssigen Formaldehyd unter leicht reduziertem Druck.

### Beispiel 3c:

5 g Jetsoft® Konzentrat (Silconaminöl der Wacker Chemie AG, München, Deutschland) wird in 10 g Isopropanol gelöst und mit. 20 g Wasser versetzt. Danach wird die Lösung mit 1000 µl wässriger Formaldehydlösung (36%) unter starkem Rühren bei Raumtemperatur versetzt. Nach erfolgter Zugabe beträgt der pH- Wert 5. Die Lösung wird mit Ammoniaklösung (25%) auf pH=8 eingestellt. Man rührt noch 1 Stunde bei Raumtemperatur und entfernt anschließend überschüssigen Formaldehyd unter leicht reduziertem Druck.

### Beispiel 3d:

5 g WACKER Finish CT 45 E (Makroemulsion eines Silconaminöls der Wacker Chemie AG, München, Deutschland) wird mit 10 g Isopropanol und mit 20 g Wasser versetzt. Danach wird die Lösung mit 1000 µl wässriger Formaldehydlösung (36%) unter starkem Rühren bei Raumtemperatur versetzt. Nach erfolgter Zugabe beträgt der pH- Wert 5. Die Lösung wird mit Ammoniaklösung (25%) auf pH=8 eingestellt. Man rührt noch 1 Stunde bei Raumtemperatur und entfernt anschließend überschüssigen Formaldehyd unter leicht reduziertem Druck.

### Beispiel 3e:

5 g WACKER Finish CT 96 E (Mikroemulsion eines Silconaminöls der Wacker Chemie AG, München, Deutschland) wird mit 10 g Isopropanol und mit 20 g Wasser versetzt. Danach wird die Lösung mit 1000 µl wässriger Formaldehydlösung (36%) unter starkem Rühren bei Raumtemperatur versetzt. Nach erfolgter Zugaeb wird die Lösung mit Ammoniaklösung (25%) auf pH=8 eingestellt. Man rührt noch 1 Stunde bei Raumtemperatur und entfernt anschließend überschüssigen Formaldehyd unter leicht reduziertem Druck.

### Beispiel 4:

Stoffmuster aus Baumwollfaser werden mit den Produktlösungen aus den Beispielen 1 bis 3 sowie mit den entsprechenden nicht methylolhaltigen Produkten beschichtet. Zur Trocknung und Vernetzung werden die Stoffmuster für 15 Minuten bei 130 °C oder unter Zusatz von para-Toluolsulfonsäure bei 60 °C für eine Stunde im Trockenschrank gelagert. Anschließend werden die Stoffmuster für jeweils 12 Stunden bei Raumtemperatur in Wasser, Ethanol und Hexan gelagert. An den getrockneten Stoffmustern wird die Permanenz der Beschichtung durch Wägung geprüft.
Die Bestimmung des Weichgriffs erfolgt händisch.

| | Permanenz in Wasser | Permanenz in Ethanol | Permanenz in Hexan | Weichgriff |
|---|---|---|---|---|
| Beispiel 1a (V) | -- | -- | - | - |
| Beispiel 1b (V) | -- | -- | - | - |
| Beispiel 2a | ++ | + | ++ | - |
| Beispiel 2b | ++ | + | ++ | - |
| Beispiel 3a | ++ | -- | -- | + |
| Finish CT34 E (V) | -- | -- | -- | + |
| Beispiel 3b | ++ | + | + | + |
| Wetsoft® CTA (V) | - | -- | -- | + |
| Beispiel 3c | ++ | + | - | + |
| Jetsoft® Konzentrat (V) | -- | -- | -- | + |
| Beispiel 3d | ++ | ++ | - | + |
| Finish CT45E (V) | | | | |
| Beispiel 3e | ++ | ++ | ++ | + |
| Finish CT96 (V) | | | | |

| | | | | |
|---|---|---|---|---|
| (V): Vergleichsbeispiel; Permanenz: ++: sehr gut; +: gut; - schlecht; -- sehr schlecht; Weichgriff: + gut - schlecht | | | | |

## Patentansprüche

1. Verbindungen (M), welche mindestens zwei Organopolysiloxaneinheiten (S) und mindestens eine Methylolgruppe der allgemeinen Formel (1)
L¹L²N-M1 (1),
aufweisen, in der
**M1** einen Rest -HCR¹-OH,
**R¹** Wasserstoff oder einen gegebenenfalls mit -CN oder -Halogen substituierten C₁-C₁₀-Kohlenwasserstoffrest und,
**L¹** und **L²** organische N-C gebundene Reste bedeuten,
wobei mindestens **L¹** mindestens eine
Organopolysiloxaneinheit (S) aufweist,
wobei in **L¹** mindestens eine Organopolysiloxaneinheit (S) über eine Si-C Bindung gebunden ist,
wobei in **L²** die N-C Bindung über ein aliphatisch gesättigtes Kohlenstoffatom erfolgt und
wobei mindestens 50 % der Organopolysiloxaneinheiten (S) ausschliesslich unsubstituierte Kohlenwasserstoffreste und Si-O-Si Bindungen aufweisen.

2. Verbindungen (M) nach Anspruch 1, bei denen **R¹** Wasserstoff oder einen unsubstituierten oder substituierten C₁-C₃-Kohlenwasserstoffrest bedeutet.

3. Verbindungen (M) nach Anspruch 1 oder 2, welche die allgemeine Formel (2)
Q-(2a,2b)_{C}-Q (2),
besitzen, wobei die Einheiten 2a und 2b statistisch, blockartig, alternierend oder in einer Mischung daraus angeordnet sein können, wobei die Einheiten 2a und 2b den allgemeinen Formeln (2a) und (2b) 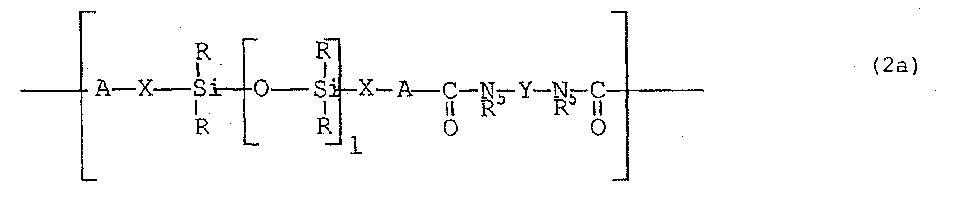 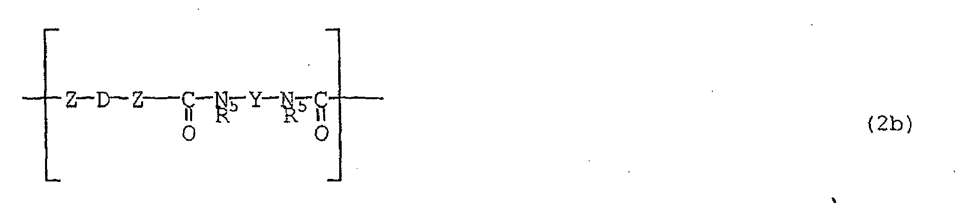 entsprechen, wobei
**l** und **c** eine ganze Zahl von mindestens 1,
**R⁵** M1 oder Wasserstoff, mit der Maßgabe, daß wenigstens ein Rest **R⁵** kein Wasserstoff ist,
**R** Wasserstoff oder einen monovalenten, gegebenenfalls mit-CN, -NCO, -NR²₂, -COOH, -COOR², -PO(OR²)₂, -Halogen,-Acryl, -Epoxy, -SH, -OH oder -CONR²₂ substituierten, C₁-C₂₀-Kohlenwasserstoffrest oder C₁-C₂₀-Kohlenwasserstoffoxyrest, in dem jeweils eine oder mehrere, einander nicht benachbarte Methyleneinheiten durch Gruppen -O-, -CO-, -COO-, -OCO-, -OCOO-, -S-, -NR²-, -(CH₂CH₂O)ₙ-, oder -(CH₂CHCH₃O)ₙ- ersetzt sein können und in denen eine oder mehrere, einander nicht benachbarte Methineinheiten durch Gruppen, -N=,-N=N- oder -P= ersetzt sein können,
**R²** Wasserstoff oder einen monovalenten, gegebenenfalls mit-CN, -NCO oder -Halogen substituierten, C₁-C₁₀-Kohlenwasserstoffrest,
**n** eine ganze Zahl von 1 bis 1000,
**X** einen Alkylen-Rest mit 1 bis 60 Kohlenstoffatomen, in dem einander nicht benachbarte Methyleneinheiten durch Gruppen -O- oder -S- ersetzt sein können,
**A** ein Sauerstoffatom, ein Schwefelatom oder -NR⁵-,
**Z** ein Sauerstoffatom, ein Schwefelatom oder -NR⁵-,
**Y** einen zweiwertigen, gegebenenfalls durch Fluor oder Chlor substituierten Kohlenwasserstoffrest mit 1 bis 20 Kohlenstoffatomen, wobei die N-C Bindungen über aliphatisch gesättigte Kohlenstoffatome erfolgen,
**D** einen gegebenenfalls durch Fluor, Chlor, C₁-C₆-Alkyl- oder C₁-C₆-Alkylester substituierten Alkylenrest mit 1 bis 700 Kohlenstoffatomen, in dem einander nicht benachbarte Methyleneinheiten durch Gruppen -O-, -COO-, -OCO-, oder-OCOO-, ersetzt sein können, der ebenfalls neutralisierte oder freie Amin-, Carbonsäure- oder Sulfonsäure-Gruppen enthalten kann und
**Q** eine reaktive oder nicht reaktive Endgruppe, welche kovalent an das Polymer gebunden ist, bedeuten.

4. Verbindungen (M) nach Anspruch 3, bei denen **R** ausgewählt wird aus Methyl, Ethyl, Vinyl und Phenyl.

5. Verbindungen (M) nach Anspruch 1 oder 2, welche die allgemeine Formel (3)
(SiO_{4/2})ₖ(R³SiO_{3/2})ₘ(R³₂SiO_{2/2})ₚ(R³₃SiO_{1/2})_{q}
[O_{1/2}SiR³₂-X¹-NM¹-X²-NR⁶ᵣR⁵₍₂₋ᵣ₎]ₛ[O_{1/2}H]ₜ (3)
besitzen, wobei
**X¹** bivalente, gegebenenfalls substituierte aromatische, heteroaromatische oder aliphatische Reste (CR⁴₂)_{b}, in denen jeweils eine oder mehrere, einander nicht benachbarte Methyleneinheiten durch Gruppen -O-, -CO-, -COO-, -OCO-,-OCOO-, -S-, -NR⁴-, -(CX₂CH₂O)_{d}-, oder -(CH₂CHCH₃O)_{d}-ersetzt sein können und in denen eine oder mehrere, einander nicht benachbarte Methineinheiten durch Gruppen,-N=,-N=N- oder -P= ersetzt sein können,
**X²** bivalente, gegebenenfalls substituierte aliphatische Reste (CR⁴₂)_{b}, in denen jeweils eine oder mehrere, einander nicht benachbarte Methyleneinheiten durch Gruppen -O-, -CO-,-COO-, -OCO-, -OCOO-, -S-, -NR⁴-, -(CH₂CH₂O)_{d}-, oder-(CH₂CHCH₃O)_{d}- ersetzt sein können,
**R⁴** die Bedeutungen von **R²** gemäss Anspruch 1,
**b** eine ganze Zahl von 1 bis 50,
**d** eine ganze Zahl von 1 bis 50,
**R³** und **R⁶** die Bedeutungen von **R** gemäss Anspruch 1,
**r** Werte 0, 1 oder 2,
**s** ganzzahlige Werte von mindestens 1,
**t** 0 oder ganzzahlige Werte und
**k + m + p + q** ganzzahlige Werte von mindestens 2 bedeuten.

6. Verbindungen (M) nach Anspruch 3, bei denen die Reste **R³** Wasserstoff, Methyl, Ethyl, Phenyl und Vinyl bedeuten.

7. Wäßrige Dispersionen der Verbindungen (M) gemäss Anspruch 1 bis 6.

8. Verfahren zur Herstellung der Verbindungen (M) durch Umsetzung der Vorläuferverbindungen der Verbindungen (M), welche mindestens zwei Organopolysiloxaneinheiten (S) und mindestens eine sekundäre Aminogruppe der allgemeinen Formel (1*)
L¹L²N-H (1*),
aufweisen, mit Aldehydreagenzien der allgemeinen Formel (4),
R¹-COH (4),
wobei **L¹, L²** und **R¹** die in Anspruch 1 angegebenen Bedeutungen aufweisen und wobei mindestens 50 % der Organopolysiloxaneinheiten (S) ausschliesslich unsubstituierte Kohlenwasserstoffreste und Si-O-Si Bindungen aufweisen.

9. Verfahren nach Anspruch 8, welches in wäßriger Phase durchgeführt wird.

10. Verwendung der Verbindungen (M) gemäss Anspruch 1 bis 6 als Beschichtungsmittel, Bindemittel und Überzugsmittel für Substrate, einschliesslich Textil- und Papierfasern.

## Claims

1. Compounds (M) comprising at least two organopolysiloxane units (S) and at least one methylol group of the general formula (1)
L¹L²N-M1 (1)
where
**M1** represents an -HCR¹-OH radical,
**R¹** represents hydrogen or an optionally NC- or halogen-substituted C₁-C₁₀-hydrocarbyl radical, and
**L¹** and **L²** represent organic N-C-attached radicals,
of which at least **L¹** comprises at least one organopolysiloxane unit (S),
at least one organopolysiloxane unit (S) in L¹ being attached via an Si-C bond,
the N-C bond in **L²** being via an aliphatically saturated carbon atom, and
at least 50% of the organopolysiloxane units (S) exclusively having unsubstituted hydrocarbyl radicals and Si-O-Si bonds.

2. Compounds (M) according to Claim 1 wherein **R¹** represents hydrogen or a substituted or unsubstituted C₁-C₃-hydrocarbyl radical.

3. Compounds (M) according to Claim 1 or 2 having the general formula (2)
Q-(2a,2b)_{c}-Q (2)
where the units 2a and 2b may be disposed randomly, blocklike, alternatingly or in a mixture thereof, the units 2a and 2b conforming to the general formulae (2a) and (2b) 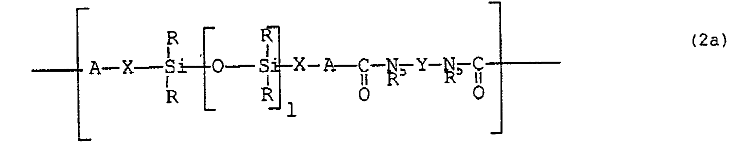 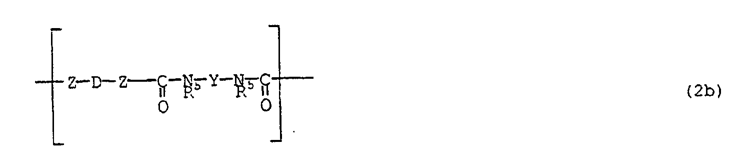 where
**l** and **c** represent a whole number of at least 1,
**R⁵** represents M1 or hydrogen subject to the proviso that at least one **R⁵** radical is not hydrogen,
**R** represents hydrogen or a monovalent C₁-C₂₀-hydrocarbyl or C₁-C₂₀-hydrocarbyloxy radical which is optionally substituted with -CN, -NCO, -NR²₂, -COOH, -COOR², -PO(OR²)₂, -halogen, -acryloyl, -epoxy, -SH, -OH or -CONR²₂ and in each of which one or more mutually nonadjacent methylene units may be replaced by groups -O-, -CO-, -COO-, -OCO-, -OCOO-, -S-, -NR²-, -(CH₂CH₂O)ₙ- or -(CH₂CHCH₃O)ₙ- and in each of which one or more mutually nonadjacent methine units may be replaced by groups -N=, -N=N- or -P=,
**R²** represents hydrogen or a monovalent optionally NC-, OCN- or halogen-substituted C₁-C₁₀-hydrocarbyl radical,
**n** represents a whole number from 1 to 1000,
**X** represents an alkylene radical which has 1 to 60 carbon atoms and in which mutually nonadjacent methylene units may be replaced by groups -O- or -S-,
**A** represents an oxygen atom, a sulfur atom or -NR⁵-,
**Z** represents an oxygen atom, a sulfur atom or -NR⁵-,
**Y** represents a bivalent optionally fluorine- or chlorine-substituted hydrocarbyl radical which has 1 to 20 carbon atoms and in which the N-C bonds are via aliphatically saturated carbon atoms,
**D** represents an alkylene radical which has 1 to 700 carbon atoms, which is optionally substituted by fluorine, chlorine, C₁-C₆-alkyl or C₁-C₆-alkyl ester and in which mutually nonadjacent methylene units may be replaced by groups -O- , -COO- , -OCO- or -OCOO- and which may contain likewise neutralized or free amine, carboxylic acid or sulfonic acid groups, and
**Q** represents a reactive or nonreactive end group attached to the polymer by a covalent bond.

4. Compounds (M) according to Claim 3 wherein R is selected from methyl, ethyl, vinyl and phenyl.

5. Compounds (M) according to Claim 1 or 2 having the general formula (3)
(SiO_{4/2})ₖ(R³SiO_{3/2})ₘ(R³₂SiO_{2/2})ₚ(R³₃SiO_{1/2})_{q}
[O_{1/2}SiR³₂-X¹-NM¹-X²-NR⁶ᵣR⁵₍₂₋ᵣ₎]ₛ[O_{1/2}H]ₜ (3)
where
**X¹** represents bivalent, optionally substituted aromatic, heteroaromatic or aliphatic radicals (CR⁴₂)_{b} in each of which one or more mutually nonadjacent methylene units may be replaced by groups -O-, -CO-, -COO-, -OCO-, -OCOO-, -S-, -NR⁴-, -(CH₂CH₂O)_{d}- or -(CH₂CHCH₃O)_{d}- and in each of which one or more mutually nonadjacent methine units may be replaced by groups -N=, -N=N- or -P=,
**X²** represents bivalent, optionally substituted aliphatic radicals (CR⁴₂)_{b} in each of which one or more mutually nonadjacent methylene units may be replaced by groups -O-, -CO-, -COO-, -OCO-, -OCOO-, -S-, -NR⁴-, -(CH₂CH₂O)_{d}- or -(CH₂CHCH₃O)_{d}-,
**R⁴** represents the meanings of **R²** according to Claim 1,
**b** represents a whole number from 1 to 50,
**d** represents a whole number from 1 to 50,
**R³** and **R⁶** represent the meanings of **R** according to Claim 1,
**r** represents 0, 1 or 2,
**s** represents whole-numbered values of at least 1,
**t** represents 0 or whole-numbered values, and
**k + m + p + q** represents whole-numbered values of at least 2.

6. Compounds (M) according to Claim 3 wherein the **R³** radicals represent hydrogen, methyl, ethyl, phenyl and vinyl.

7. Aqueous dispersions of the compounds (M) according to Claim 1 to 6.

8. Process for preparing the compounds (M) by reacting the precursor compounds of the compounds (M), which have at least two organopolysiloxane units (S) and at least one secondary amino group of the general formula (1*)
L¹L²N-H (1*),
with aldehyde reagents of the general formula (4)
R¹-COH (4)
where **L¹, L²** and **R¹** represent the meanings indicated in Claim 1 and at least 50% of the organopolysiloxane units (S) exclusively have unsubstituted hydrocarbyl radicals and Si-O-Si bonds.

9. Process according to Claim 8 which is carried out in aqueous phase.

10. Use of the compounds (M) according to Claim 1 to 6 as coatings, binders and overcoatings for substrates, including textile fibers and paper fibers.

## Revendications

1. Composés (M), qui présentent au moins deux unités organopolysiloxane (S) et au moins un groupe méthylol de formule générale (1)
L¹L²N-M1 (1),
dans laquelle
M1 signifie un radical -HCR¹-OR,
R¹ signifie hydrogène ou un radical hydrocarboné en C₁-C₁₀ le cas échéant substitué par -CN ou -halogène et
L¹ et L² signifient des radicaux organiques liés par N-C,
où au moins L¹ présente au moins une unité organopolysiloxane (S),
où, dans L¹, au moins une unité organopolysiloxane (S) est liée via une liaison Si-C,
où, dans L², la liaison N-C est réalisée via un atome de carbone aliphatiquement saturé, et
où au moins 50% des unités organopolysiloxane (S) présentent exclusivement des radicaux hydrocarbonés non substitués et des liaisons Si-O-Si.

2. Composés (M) selon la revendication 1, où R¹ signifie hydrogène ou un radical hydrocarboné en C₁-C₃ non substitué ou substitué.

3. Composés (M) selon la revendication 1 ou 2, qui présentent la formule générale (2)
Q-(2a,2b)_{c}-Q (2),
où les unités 2a et 2b peuvent être disposées statistiquement, par blocs, en alternance ou en un mélange de ces dispositions, les unités 2a et 2b correspondant aux formules générales (2a) et (2b) 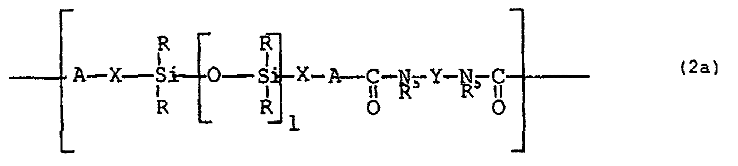 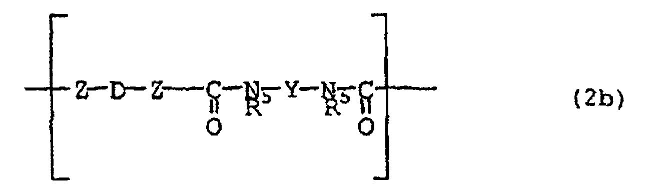 où
1 et c valent un nombre entier d'au moins 1,
R⁵ signifie M1 ou hydrogène, à condition qu'au moins un radical R⁵ ne représente pas hydrogène,
R signifie hydrogène ou un radical hydrocarboné en C₁-C₂₀ ou un radical hydrocarboné en C₁-C₂₀ à fonctionnalité oxy, monovalent, le cas échéant substitué par -CN, -NCO, -NR²₂, -COOH, -COOR² -PO(OR²)₂, -halogène, -acryle, -époxy, -SH, -OH ou -CONR²_{2,} dans lequel à chaque fois une ou plusieurs unités méthylène non adjacentes peuvent être remplacées par des groupes -O-, -CO-, -COO-, -OCO-, -OCOO-, -S-, -NR²- -(CH₂CH₂O)ₙ- ou -(CH₂CHCH₃O)ₙ- et dans lequel une ou plusieurs unités méthine non adjacentes peuvent être remplacées par des groupes -N=, -N=N- ou -P=,
R² signifie hydrogène ou un radical hydrocarboné en C₁-C₁₀, monovalent, le cas échéant substitué par -CN, -NCO ou -halogène,
n vaut un nombre entier de 1 à 1000,
X signifie un radical alkylène comprenant 1 à 60 atomes de carbone, dans lequel des unités méthylène non adjacentes peuvent être remplacées par des groupes -O- ou -S-,
A signifie un atome d'oxygène, un atome de soufre ou -NR⁵-,
Z signifie un atome d'oxygène, un atome de soufre ou -NR⁵-,
Y signifie un radical hydrocarboné divalent, le cas échéant substitué par fluor ou chlore comprenant 1 à 20 atomes de carbone, les liaisons N-C étant réalisées via des atomes de carbone aliphatiquement saturés,
D signifie un radical alkylène comprenant 1 à 700 atomes de carbone, le cas échéant substitué par fluor, chlore, C₁-C₆-alkyle ou ester de C₁-C₆-alkyle, dans lequel des unités méthylène non adjacentes peuvent être remplacées par des groupes -O-, -COO-, -OCO-, ou -OCOO-, et qui peut également contenir des groupes amine, acide carboxylique ou acide sulfonique neutralisés ou libres et
Q signifie un groupe terminal réactif ou non réactif qui est lié par covalence au polymère.

4. Composés (M) selon la revendication 3, où R est choisi parmi méthyle, éthyle, vinyle et phényle.

5. Composés (M) selon la revendication 1 ou 2, qui présentent la formule générale (3)
(SiO_{4/2})ₖ(R³SiO_{3/2})ₘ(R³₂SiO_{2/2})ₚ(R³₃SiO_{1/2})_{q}
[O_{1/2}SiR³₂-X¹-NM¹-X²-NR⁶ᵣR⁵₍₂₋ᵣ₎]ₛ[O_{1/2}H]ₜ (3)
où
X¹ signifie des radicaux (CR⁴₂)_{b} divalents, le cas échéant substitués, aromatiques, hétéroaromatiques ou aliphatiques, dans lesquels à chaque fois une ou plusieurs unités méthylène non adjacentes peuvent être remplacées par des groupes -O-, -CO-, -COO-, -OCO-, -OCOO-, -S-, -NR⁴-, -(CH₂CH₂O)_{d}-_{,} ou -(CH₂CHCH₃O)_{d}- et dans lesquels une ou plusieurs unités méthine non adjacentes peuvent être remplacées par des groupes -N=,-N=N- ou -P=,
X² signifie des radicaux (CR⁴₂)_{b} divalents, le cas échéant substitués, aliphatiques, dans lesquels une ou plusieurs unités méthylène non adjacentes peuvent être remplacées par des groupes -O-, -CO-, -COO-, -OCO-, -OCOO-, -S-, -NR⁴-, -(CH₂CH₂O)_{d}-, ou -(CH₂CHCH₃O)_{d}-,
R⁴ présente les significations de R² selon la revendication 1,
b vaut un nombre entier de 1 à 50,
d vaut un nombre entier de 1 à 50,
R³ et R⁶ présentent les significations de R selon la revendication 1,
r vaut 0, 1 ou 2,
s vaut des valeurs entières d'au moins 1,
t vaut 0 ou des valeurs entières et
k + m + p + q valent des valeurs entières d'au moins 2.

6. Composés (M) selon la revendication 3, où les radicaux R³ signifient hydrogène, méthyle, éthyle, phényle et vinyle.

7. Dispersions aqueuses des composés (M) selon la revendication 1 à 6.

8. Procédé pour la préparation de composés (M) par réaction de composés précurseurs des composés (M), qui présentent au moins deux unités organopolysiloxane (S) et au moins un groupe amino secondaire de formule générale (1*)
L¹L²N-H (1*),
avec des réactifs aldéhyde de formule générale (4),
R¹-COH (4),
où L¹, L² et R¹ présentent les significations indiquées dans la revendication 1 et où au moins 50% des unités organopolysiloxane (S) présentent exclusivement des radicaux hydrocarbonés non substitués et des liaisons Si-O-Si.

9. Procédé selon la revendication 8, qui est réalisé en phase aqueuse.

10. Utilisation des composés (M) selon la revendication 1 à 6 comme agent de revêtement, liant et agent de recouvrement pour des substrats, y compris les fibres de textile et de papier.
